# EUROPÄISCHE PATENTSCHRIFT

(11) **EP 1 480 851 B1**
(45) Veröffentlichungstag und Bekanntmachung des Hinweises auf die Patenterteilung: **11.10.2006**
(21) Anmeldenummer: 03708085.0
(22) Anmeldetag: 08.02.2003
(51) Int. Cl.: B60N 2/48

(54) **FAHRZEUGSITZ MIT KOPFSTÜTZE MIT NACKEN- UND SEITENABSTÜTZUNG**
VEHICLE SEAT WITH HEADREST COMPRISING NUCHAL AND LATERAL SUPPORTS
SIEGE DE VEHICULE POURVU D'UN APPUIE-TETE COMPRENANT DES SUPPORTS NUCAUX ET LATERAUX

(30) Priorität: 04.03.2002 DE 10209187
(43) Veröffentlichungstag der Anmeldung: 01.12.2004
(73) Patentinhaber: DaimlerChrysler AG, 70567 Stuttgart (DE)
(72) Erfinder: FLORY, Gerhard, 71032 Böblingen (DE); GEISEL, Thomas, 72108 Rottenburg (DE); RAUDONAT, Karsten, 67655 Kaiserslautern (DE); SCHMIDT, Andreas, 67065 Ludwigshafen (DE); WEINGART, Andreas, 67700 Niederkirchen (DE); FRANZMANN, Günter, 67806 Rockenhausen (DE)
(86) Internationale Anmeldenummer: PCT/EP2003/001267
(87) Internationale Veröffentlichungsnummer: WO 2003/074319

(56) Entgegenhaltungen:
- WO-A-95/09742
- DE-A- 10 061 346
- DE-C- 19 947 872
- FR-A- 2 806 984
- FR-A- 2 811 949
- US-A- 5 752 742
- US-B1- 6 220 668

## Beschreibung

Die Erfindung betrifft einen Fahrzeugsitz nach dem Oberbegriff des Anspruchs 1.

Die DE 196 53 516 A1 zeigt eine solche Kopfstütze für einen Fahrzeugsitz mit einem Mittelteil und zwei Seitenteilen. Die Seitenteile sind bewegbar an dem Mittelteil angeordnet und können aus einer neben dem Mittelteil angeordneten Ausgangsposition in eine nach vorne gerichtete Kopfanlageposition gebracht werden. Hier geben die Seitenteile einen ggf. unzureichenden Seitenhalt, so dass der Kopf bei Kurvenfahrten nicht optimal abgestützt wird. Zudem wird aufgrund der Position der Kopfstütze auf den Kopf des Sitzenden ein nach vorne gerichtetes Kippmoment ausgeübt, was der Sitzende durch Anspannung seiner Nackenmuskeln ausgleichen muss.

Aus der DE 38 20 658 A1 ist ein Fahrzeugsitz mit Kopfstütze bekannt. Aus der Rückenlehne des Fahrzeugsitzes können zwei Polsterteile nach oben bis auf Höhe der Kopfstütze ausgefahren werden. Diese können einem Fahrzeuginsassen als zusätzliches Ruhepolster dienen. Nachteilig ist hier, dass die Ruhepolster dem Kopf des Fahrzeuginsassen nur unzureichend abstützen. Die nach oben ausgefahrenen Ruhepolster fehlen zudem im Rücken- bzw. Schulterbereich, so dass diese Lösung lediglich eine relativ komfortable Abstützung bietet.

Das deutsche Gebrauchsmuster G 94 18 878.5 zeigt ein Kopfpolster für einen Kinderfahrradsitz. Das Polster wird mit Gummibändern an der Oberseite eines Kinderfahrradsitzes befestigt Es weist ein flexibles Polster auf, das durch die Gummibänder in einem Bogen gehalten ist und so in Ruhelage dem Kopf eine Seitenführung bietet. Für eine normale, aufrechte Sitzposition ist das Polster ungeeignet, da es zum einen labil sein und zum anderen die Sicht zur Seite stark einschränken könnte.

Die DE 199 47 872 C1 zeigt einen Fahrzeugsitz, der mehrere schwenkbare Polsterelemente aufweist. Anhand der schwenkbaren Polsterteile kann die Kontur der Sitzfläche verändert werden.

Es ist Aufgabe der vorliegenden Erfindung einen Fahrzeugsitz zu schaffen, der sowohl in aufrechter Sitzposition wie auch in einer Ruheposition eine angepasste und komfortable Abstützung des Kopfes aufweist. Insbesondere soll der Fahrzeugsitz eine gute Seitenführung des Kopfes aufweisen und so ausgebildet sein, dass er eine aufrechte Kopfhaltung, z. B. zum Fahren oder Lesen, und auch eine entspannte Kopfhaltung, z. B. zum Ruhen oder Schlafen, unterstützt, vorzugsweise ohne dass auf den Kopf ein nach vorne gerichtetes Kippmoment wirkt.

Diese Aufgabe wird erfindungsgemäß durch einen Fahrzeugsitz nach den Merkmalen des Anspruchs 1 gelöst.

Der Fahrzeugsitz weist eine Kopfstütze auf, die ein Mittelpolster und zwei rechts und links an das Mittenpolster anschließend angeordnete Seitenpolster aufweist. Das Mittenpolster weist eine variable Polsterhärte auf. In Stützposition, d. h. bei aufrechter Kopfhaltung und in Grundstellung zurückgeschwenkten Seitenpolstern, z. B. zum Lesen oder Fahren, weist das Mittenpolster eine härtere Polsterhärte auf. Der Kopf sinkt dabei nicht so tief in das Polster ein und wird gut gestützt. Eine Seitenbewegung des Kopfes und/oder die Seitensicht wird so nicht behindert. Für eine entspannte Ruhelage, vorzugsweise mit zurückgeneigtem Kopf, werden die Seitenpolster in Anlagepostion aus der Grundstellung vorgeschwenkt. Die Polsterhärte des Mittenpolsters wird in Anlageposition reduziert, so dass der Kopf tiefer in das Polster einsinkt. Dadurch wird der Kopf gegenüber der Anlage an dem härteren Polster mit mehr Auflagefläche gehalten.

Es ist vorgesehen, dass die Seitenpolster (bzw. Seitenwangen) beim Vorschwenken mit dem Mittenpolster zum Reduzieren der Polsterhärte, bzw. beim Zurückschwenken zum Vergrößern der Polsterhärte, zusammenwirken. Die vorgeschwenkten Seitenpolster können bis in Anlage mit dem Kopf aus der Grundstellung nach vorne geschwenkt werden und weisen so eine gute Seitenabstützung des Kopfes auf. Dies verhindert, dass der Kopf beim Schlafen und/oder bei Kurvenfahrt von einer Seite der Kopfstütze zu der anderen Seite pendelt.

Insbesondere ist es vorgesehen, die Kopfstützenkontur an die Kopfform des Hinterkopfes und des Nackens angepasst auszubilden. Die Kopfstütze gewährleistet dadurch eine gute und komfortable Abstützung des Kopfes im Kopf und Nackenbereich.

Eine besonders gute Abstützung des Kopfes wird gewährleistet, indem die Neigung der Kopfstütze relativ zu dem Fahrzeugsitz einstellbar ist. So kann die Kopfstütze so eingestellt werden, dass in jeder Sitzposition der Kopf und/oder Nackenbereich optimal abstützbar ist. Zudem können die Drehachsen der Seitenpolster so angeordnet sein, dass der Kopf bei vorgeschwenkten Seitenpolstern in der Kopfstütze von hinten umfasst und ähnlich wie in einem Prisma gestützt wird. So wird auch beim Schlafen eine gute und entspannte und auch sichere Lagerung des Kopfes erzielt.

Um die Kopfstütze an unterschiedlich große Personen anzupassen ist vorgesehen, dass die Kopfstütze in der Höhe verstellbar ist. Sie kann eine automatisch angetriebene Höhenverstellvorrichtung aufweisen, die z. B. über einen elektrischen Linearantrieb, vorzugsweise Spindelantrieb die Kopfstütze relativ zu dem Sitzkissen nach oben oder unten fährt.

Die Seitenpolster der Kopfstütze können manuell verstellbar ausgebildet sein. Hierbei kann vorgesehen sein, dass die Seitenpolster in den Endlagen der Stütz- und/oder Anlageposition verrasten, um ein optisch schönes Äußeres zu erhalten und ein unbeabsichtigtes Verstellen der Seitenteile zu verhindern. In den frei einstellbaren Zwischenstellungen werden die Seitenpolster durch Reibung gehalten. Die Reibung ist dabei so bemessen, dass sich die Seitenteile einerseits nicht unbeabsichtigt verstellen und andererseits bei einem starken Auftreffen des Kopfes auf die Seitenwangen, z. B. infolge eines Unfalls, diese leicht zurückschwenken und keine Verletzungsgefahr darstellen.

In einer Ausführung kann der Fahrzeugsitz als Fahrzeugruhesitz ausgebildet sein, der eine schwenkbare Rückenlehne und eine in der Neigung verstellbare Sitzfläche aufweist. Der Fahrzeugruhesitz kann von einer aufrechter Sitzstellung, vorzugsweise Fahrstellung oder Gebrauchstellung durch Neigen der Rückenlehne und/oder der Sitzfläche in eine zurückgeneigte Ruhestellung verbracht werden.

Um die Kopfstütze leicht entnehmen oder austauschen zu können, ist diese über ein in die Rückenlehne eingreifendes Gestänge mit dem Fahrzeugsitz verbunden. Das Gestänge kann in der Rückenlehne verrasten und wird so sicher gehalten.

Es ist möglich, den erfindungsgemäßen Fahrzeugsitz in Personenkraftwagen, Omnibussen, sowie Wasser- oder Schienenfahrzeugen zu verwenden. Auch eine Verwendung des erfindungsgemäßen Fahrzeugsitzes als bequemer Passagiersessel in Flugzeugen ist vorgesehen.

Weitere Merkmale und Ausführungsformen der Erfindung ergeben sich aus den Ansprüchen, den Figuren und der

In den Figuren sind weitere Ausführungen der Erfindung dargestellt und erläutert, dabei zeigen:
- **Figur 1:**: Einen Fahrzeugsitz in Ruhestellung mit Kopfstütze,
- **Figur 2:**: eine perspektivische Darstellung der Kopfstütze,
- **Figur 3:**: eine schematische Darstellung der Kopfstütze in Stützstellung,
- **Figur 4:**: eine schematische Darstellung der Kopfstütze in Anlagestellung.

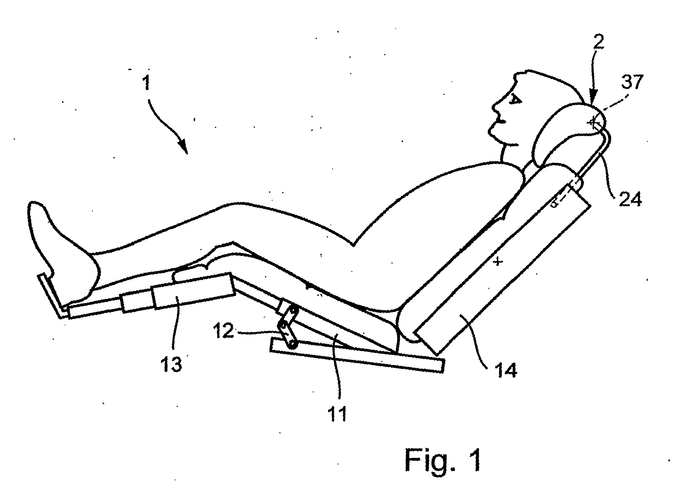

In der **Figur 1** ist ein Fahrzeugsitz 1 mit einer Person in einer Ruheposition dargestellt. Der Fahrzeugsitz ist als verstellbarer Fahrzeugsitz mit einer aufrechten Sitzposition, wie sie bei einem herkömmlichen Fahrzeugsitz üblich ist, und einer einstellbaren Ruheposition ausgebildet. Er weist eine gepolsterte Rückenlehne 14, ein gepolstertes Sitzkissen 11 sowie eine Fußstütze 13 auf. Am oberen Ende der Rückenlehne 14 ist eine Kopfstütze 2 angeordnet. In der in Figur 1 dargestellten Ruheposition ist gegenüber einer aufrechten Sitzposition die Fußstütze 13 angehoben, so dass der Sitzende seine Füße bequem auf der Fußstütze 13 ablegen kann. Das Sitzkissen 11 ist über einen Sitzkissenversteller 12 in der Neigung verstellbar, so dass das Sitzkissen 11 eine Sitzfläche mit einstellbarer Neigung bildet.

Die Rückenlehne 14 ist um eine quer zu der Sitzfläche verlaufende Schwenkachse schwenkbar, so dass eine mehr aufrechte Sitzposition oder eine mehr liegende Ruheposition wählbar ist.

Die am oberen Ende der Rückenlehne 14 angeordnete Kopfstütze 2 ist über ein Haltegestänge 24 mit der Rückenlehne verbunden, indem das Haltegestänge von oben in die Rückenlehne 14 eingreift. In der Rückenlehne 14 ist eine Aufnahme für das Gestänge 24 angeordnet, die mit dem Gestänge 24 lösbar verrastet. Zum Verstellen der Höhe der Kopfstütze 2 weist diese Aufnahme einen Antrieb auf, der die Aufnahme in der Rückenlehne 14 nach oben und/oder nach unten verfährt. So kann das Gestänge mehr oder weniger tief in die Rückenlehne 14 eingreifen und so die Höhe der Kopfstütze 2 an den Sitzenden angepasst werden.

Die Kopfstütze 2 und/oder das Kopfpolster der Kopfstütze 2 weist eine dem Hinterkopfbereich und/oder Nackenbereich angepasste Kontur auf. Zusätzlich ist die Neigung der Kopfstütze 2 um eine im oberen Bereich der Kopfstütze 2 angeordnete Schwenkachse 37 verstellbar. Durch Schwenken der Kopfstütze 2 um diese Schwenkachse 37 kann der untere Bereich der Kopfstütze 2 optimal in den Nacken des Sitzenden geschwenkt werden und unterstützt so eine entspannte Kopfhaltung. Somit gewährleistet die Kopfstütze 2 eine flächige Abstützung des Kopfes und des Nackens sowohl in aufrechter Sitzposition als auch in zurückgeneigter Liegeposition. Diese Einstellmöglichkeit und die an den Hinterkopfbereich angepasste Kontur der Kopfstütze 2 bewirken einesteils, dass die Kopfstütze 2 eine optimale Anlage für den Hinterkopf und den Nacken des Sitzenden bildet und andernteils, dass auf den Kopf des Sitzenden kein Kippmoment in Richtung Kinn ausgeübt wird.

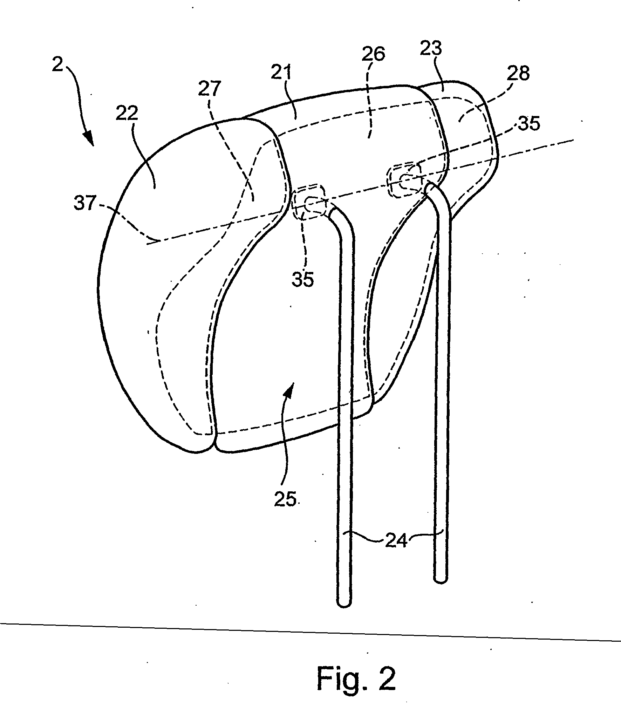

Der Aufbau der Kopfstütze 2 ist in der **Figur 2** dargestellt. Die Kopfstütze 2 weist ein Mittelpolster 21 und zwei rechts und links an das Mittelpolster 21 unmittelbar anschließend angeordnete Seitenpolster 22, 23 auf. Eine biegesteife Trägerplatte 25, die z. B. aus Kunststoff ausgebildet ist, haltert die Polster 21, 22, 23 auf der vom Sitzenden abgewandten Rückseite der Kopfstütze 2. Die Trägerplatte 25 ist dreigeteilt und weist ein Mittelteil 26 und zwei mit dem Mittelteil 26 schwenkbar verbundene Seitenteile 27 und 28 auf. Das Mittelteil 26 der Trägerplatte 25 trägt das Mittelpolster 21 und die Seitenteile 27 bzw. 28 tragen jeweils ein Seitenpolster 22 bzw. 23.

Die Trägerplatte 25 weist an ihrem Mittelteil zwei Schwenklager 35 auf, die die Trägerplatte 25 mit dem Gestänge 24 schwenkbar verbinden und an dem oberen, von dem Fahrzeugsitz abgewandten Ende des Mittelteils 26 angeordnet sind. Die beiden Schwenklager 35 legen die Schwenkachse 37 fest, um die die Kopfstütze 2 zur Neigungsverstellung schwenkbar gelagert ist. Die Neigung der Kopfstütze wird manuell verstellt, wobei die eingestellte Neigung durch Reibklemmung der Schwenklager 35 gehalten wird.

Die Seitenpolster 22 und 23 können zur verbesserten Seitenführung des Kopfes von einer Stützposition, bei der die Seitenpolster 22, 23 fluchtend mit dem Mittelpolster 21 angeordnet sind, in eine Anlageposition vorgeschwenkt werden.

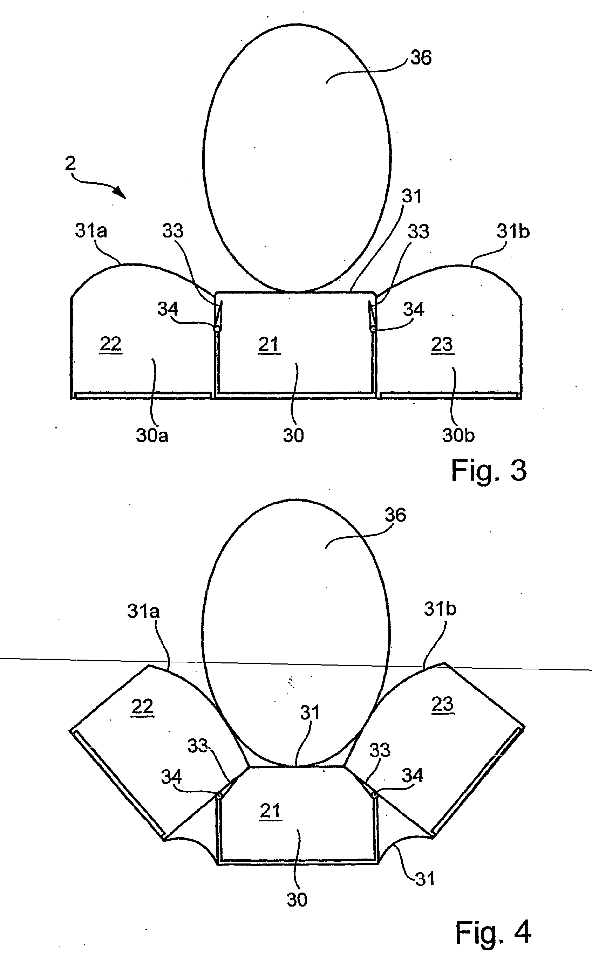

Die **Figur 3** zeigt die Kopfstütze in Stützposition der Seitenpolster und die sich dabei ergebende Anlage des Kopfes 36 an das Mittelpolster 21 in schematischer Draufsicht. Die Kopfstütze 2 weist einen Bezug 31 aus Leder oder einem anderen Bezugsstoff auf, der auf der Rückseite der Kopfstütze 2 die Trägerplatte 25 geschlossen abdeckt und auf der Vorderseite separat für das Mittelpolster 21 und die Seitenpolster 22, 23 ausgeführt ist. Die Polster weisen jeweils einen Polsterkern 30, 30a, 30b und einen Polsterbezug 31, 31a, 31b auf.

Der Polsterkern 30 des Mittelpolsters 21 weist einen in etwa quaderförmigen Querschnitt auf. Zu beiden Seiten des Mittelpolsters 21 sind Bezugseinhängungen 33 angeordnet, in die der Polsterbezug 31 des Mittelpolsters 21 eingehängt ist. Die Bezugseinhängungen 33 weisen in etwa U-förmige Gestalt mit eng aneinanderliegenden langen Schenkeln auf. Sie sind an ihrem geschlossenen Ende mit der Trägerplatte 25 verbunden und weisen dort eine Drehachse 34 auf. In die nach vorne gerichtete Öffnung der Bezugseinhängungen 33 wird der Polsterbezug 31 eingeführt und dort befestigt, z. B. durch verklemmen und/oder verkleben und/oder verschweißen.

In der in Figur 3 dargestellten Stützstellung sind die Schenkel der Bezugseinhängungen 33 in etwa parallel zu den Seitenteilen des Mittelpolsters 21 ausgerichtet und halten den Bezugsstoff 31 gespannt über dem Mittelpolster 21. Das Mittelpolster 21 weist somit in der Stützstellung eine hohe Oberflächenspannung und ein relativ hartes Polster auf. Der Kopf 36 hat also eine durch das Mittelpolster 21 straff abgestützte Anlagefläche. Die Seitbewegung des Kopfes und/oder die Seitensicht wird in der Stützstellung nicht behindert. Das ist insbesondere in einer aufgerichteten Sitzstellung und/oder beim Lesen und/oder Schreiben im Sitz von Vorteil.

**Figur 4** zeigt in Abwandlung zu Figur 3 eine Anlagestellung der Kopfstütze 2. Hier sind die Seitenpolster 22 und 23 nach vorne zum Kopf 36 hin geschwenkt. Das Mittelpolster 21 und beide Seitenpolster 22 und 23 sind in Anlage mit dem Kopf 36. Dieser wird von der Kopfstütze 2 wie in einem Prisma gehalten und/oder gestützt.

Die Seitenpolster 22, 23 schwenken um eine Achse, die im Bereich der Drehachse 34 der Bezugseinhängungen angeordnet ist. Sie wirken beim Schwenken mit den Bezugseinhängungen 33 zusammen, indem sie diese beim Vorschwenken zu dem Mittelpolster 21 hin beaufschlagen. Die Polsterhärte des Mittelpolsters wird reduziert, indem die Bezugseinhängungen 33 sich jeweils um die Drehachse 34 drehen und so den Bezug 31 entspannen. Die Seitenpolster 22, 23 drücken zudem die Oberfläche des Polsterkerns 30 des Mittelpolsters 21 zusammen und unterstützen so die Entspannung des Mittelpolsters 21. Der Kopf 36 kann in der Anlageposition tiefer in das Mittelpolster 21 einsinken als in der Stützposition. Damit vergrößert sich die Anlagefläche zwischen dem Mittelpolster 21 und dem Kopf, so dass eine weiche Abstützung des Kopfes und/oder eine entspannte Kopfhaltung erzielt wird. Die weiche Abstützung und die Umfassung des Hinterkopfes verhindert ein Pendeln des Kopfes bei Kurvenfahrt in Rechts- und Linkskurven, so dass eine entspannte Kopfhaltung und/oder entspanntes bzw. komfortables Schlafen in dem Sitz auch während der Fahrt möglich ist.

Beim Zurückschwenken der Seitenpolster 22, 23 entlasten diese das Mittelpolster 21, so dass dessen Polsterkern 30 die Bezugseinhängungen nach außen beaufschlagt, so dass diese in die in der Figur 3 dargestellte Position zurückgedreht werden und den Polsterbezug 31 wieder straffen. Damit wird das Polster des Mittelpolsters 21 verhärtet und der Kopf kann nicht mehr so tief in das Mittelpolster eindringen.

Die Seitenpolster 22, 23 werden manuell verschwenkt. Die Seitenpolster 22, 23 sind so gelagert, dass über Reibung und/oder Reibklemmung jede beliebige eingestellte Zwischenposition bei normaler Belastung gehalten wird. Trifft bei einem Crash der Kopf durch den sogenannten Rebound mit hoher Kraft auf eine Seitenwange, so kann diese zurückschwenken und stellt keine Verletzungsgefahr dar.

## Patentansprüche

1. Fahrzeugsitz, vorzugsweise Fahrzeugruhesitz, mit einer aufrechten Sitzposition und einer zurückgeneigten Ruheposition, und
einer über ein Gestänge (24) mit dem Fahrzeugsitz verbundenen Kopfstütze, die ein Mittelpolster (21) mit einem Polsterkern (30) und einem Polsterbezug (31) und zwei rechts und links an das Mittelpolster anschließend angeordnete Seitenpolster (22, 23) aufweist, wobei die Seitenpolster von einer zurückgeschwenkten Stützposition in eine vorgeschwenkte Anlageposition schwenkbar sind,
**dadurch gekennzeichnet,**
**dass** das Mittelpolster (21) eine variable Polsterhärte aufweist, wobei das Mittelpolster in Stützposition eine härtere Polsterhärte aufweist als in Anlageposition und die Spannung des Polsterbezugs (31) die Härte des Mittelpolsters variiert, indem der gespannte Polsterbezug (31) die Oberfläche des Mittelpolsters (21) verhärtet und der entspannte Polsterbezug (31) die Oberfläche des Mittelpolsters (21) entspannt.

2. Fahrzeugsitz nach Anspruch 1
**dadurch gekennzeichnet,**
**dass** die Seitenpolster (22, 23) beim Schwenken mit dem Mittelpolster (21) zum Variieren der Polsterhärte zusammenwirken.

3. Fahrzeugsitz nach Anspruch 1 oder 2,
**dadurch gekennzeichnet,**
**dass** die Neigung der Kopfstütze (2) relativ zu der Rückenlehne (14) einstellbar ist, indem die Kopfstütze (2) eine querverlaufende, in ihrem oberen, von dem Fahrzeugsitz abgewandten Bereich angeordnete Schwenkachse (37) aufweist.

4. Fahrzeugsitz nach einem der Ansprüche 1 bis 3,
**dadurch gekennzeichnet,**
**dass** die Kopfstütze (2) eine Trägerplatte (25) aufweist, die das Mittelpolster (21) und die Seitenpolster (22, 23) trägt.

5. Fahrzeugsitz nach Anspruch 4,
**dadurch gekennzeichnet,**
**dass** die Trägerplatte (25) an ihrem von der Rückenlehne (14) abgewandten Ende mit dem Gestänge (24) über ein Lager (35) schwenkbar verbunden ist und zum Einstellen der Kopfstützenneigung um dieses Lager (35) schwenkbar ausgebildet ist.

6. Fahrzeugsitz nach einem der Ansprüche 1 bis 5,
**dadurch gekennzeichnet,**
**dass** der Polsterbezug (31) in zwei zu beiden Seiten des Mittelpolsters (21) angeordneten und unmittelbar an den Polsterkern (30) anschließenden Bezugseinhängungen (33) befestigt ist.

7. Fahrzeugsitz nach einem der Ansprüche 1 bis 6,
**dadurch gekennzeichnet,**
**dass** die Seitenpolster (22, 23) beim Vorschwenken die Spannung des Polsterbezugs (31) reduzieren, indem die Seitenpolster (22, 23) die Bezugseinhängungen (33) zur Mitte des Mittelpolsters (21) hin beaufschlagen.

8. Fahrzeugsitz nach einem der Ansprüche 1 bis 7,
**dadurch gekennzeichnet,**
**dass** die Bezugseinhängungen (33) als U-förmige Klemmschienen ausgebildet sind, wobei die Klemmschienen jeweils um eine in etwa parallel zu der Trägerplatte (25) angeordnete und entlang der Außenkontur des Mittelpolsters (21) verlaufende Drehachse (34) drehbar sind.

9. Fahrzeugsitz nach Anspruch 8,
**dadurch gekennzeichnet,**
**dass** die Seitenpolster (22, 23) eine Schwenkachse aufweisen, die im Bereich der Drehachse (34) der Bezugseinhängungen (33) angeordnet ist, vorzugsweise dass die Schwenkachse der Seitenpolster (22, 23) durch die Drehachse (34) der Bezugseinhängungen (33) verläuft.

## Claims

1. Vehicle seat, preferably a vehicle rest seat, having an upright seating position and an angled-back rest position, and having a headrest connected to the vehicle seat by rods (24), which headrest has a center pad (21) having a pad core (30) and a pad cover (31) and two side pads (22, 23) adjoining the center pad to right and left, the side pads being pivotable from a swiveled-back supporting position into a swiveled-forward resting position, **characterized in that** the center pad (21) has a variable pad hardness, the center pad having a firmer pad hardness in the supporting position than in the resting position, and the tension of the pad cover (31) varying the hardness of the center pad, since the tightened pad cover (31) hardens the surface of the center pad (21) and the slackened pad cover (31) softens the surface of the center pad (21).

2. Vehicle seat according to Claim 1, **characterized in that** the side pads (22, 23), as they are swiveled, cooperate with the center pad (21) to vary the pad hardness.

3. Vehicle seat according to Claim 1 or 2, **characterized in that** the angle of the headrest (2) relative to the backrest (14) is adjustable, since the headrest (2) has a transverse-running swivel axis (37) disposed in its upper region facing away from the vehicle seat.

4. Vehicle seat according to one of Claims 1 to 3, **characterized in that** the headrest (2) has a carrier plate (25) bearing the center pad (21) and the side pads (22, 23).

5. Vehicle seat according to Claim 4, **characterized in that** the carrier plate (25), at its end facing away from the backrest (14), is pivotably connected to the rods (24) by a bearing (35), and is configured such that it can be swiveled about this bearing (35) in order to adjust the headrest angle.

6. Vehicle seat according to one of Claims 1 to 5, **characterized in that** the pad cover (31) is fastened in two cover mountings (33) disposed on both sides of the center pad (21) and directly adjoining the pad core (30).

7. Vehicle seat according to one of Claims 1 to 6, **characterized in that** the side pads (22, 23), as they are swiveled forward, reduce the tension of the pad cover (31), since the side pads (22, 23) press the cover mountings (33) toward the center of the center pad (21).

8. Vehicle seat according to one of Claims 1 to 7, **characterized in that** the cover mountings (33) are configured as U-shaped clamp rails, the clamp rails being respectively rotatable about a rotation axis (34) disposed approximately parallel to the carrier plate (25) and running along the outer contour of the center pad (21).

9. Vehicle seat according to Claim 8, **characterized in that** the side pads (22, 23) have a swivel axis disposed in the region of the rotation axis (34) of the cover mountings (33), preferably **in that** the swivel axis of the side pads (22, 23) runs through the rotation axis (34) of the cover mountings (33).

## Revendications

1. Siège de véhicule, de préférence siège de relaxation pour véhicule, avec une position assise redressée et une position de repos inclinée en arrière, et
un appui-tête raccordé au siège de véhicule par une tringlerie (24), et comprenant un coussin central (21) avec une âme de coussin (30) et un revêtement de coussin (31) et deux coussins latéraux (22, 23) adjacents au coussin central, à gauche et à droite de celui-ci, les coussins latéraux pouvant pivoter d'une position d'appui en arrière vers une position de maintien en avant,
**caractérisé en ce que** le coussin central (21) présente une dureté variable, ledit coussin central présentant une position plus dure en position d'appui qu'en position de maintien, et **en ce que** la tension du revêtement de coussin (31) modifie la dureté du coussin central, le revêtement de coussin (31) tendu durcissant la surface du coussin central (21) et le revêtement de coussin (31) détendu amollissant la surface du coussin central (21).

2. Siège de véhicule selon la revendication 1, **caractérisé en ce que** les coussins latéraux (22, 23) coopèrent avec le coussin central (21) au pivotement pour modifier la dureté de coussin.

3. Siège de véhicule selon la revendication 1 ou 2, **caractérisé en ce que** l'inclinaison de l'appui-tête (2) est réglable par rapport au dossier (14), l'appui-tête (2) présentant un axe de pivotement (37) transversal dans sa partie supérieure opposée au siège de véhicule.

4. Siège de véhicule selon l'une des revendications 1 à 3, **caractérisé en ce que** l'appui-tête (2) comprend une plaque de support (25) soutenant le coussin central (21) et les coussins latéraux (22, 23).

5. Siège de véhicule selon la revendication 4, **caractérisé en ce que** la plaque de support (25) est à son extrémité opposée au dossier (14) raccordée à la tringlerie (24) par un palier (35), de manière à pouvoir pivoter, et **en ce qu'**elle est réalisée de manière à pouvoir pivoter autour de ce palier (35) pour le réglage d'inclinaison de l'appui-tête.

6. Siège de véhicule selon l'une des revendications 1 à 5, **caractérisé en ce que** le revêtement de coussin (31) est fixé dans deux accrochages de revêtement (33) disposés des deux côtés du coussin central (21) et directement adjacents à l'âme de coussin (30).

7. Siège de véhicule selon l'une des revendications 1 à 6, **caractérisé en ce que** les coussins latéraux (22, 23) réduisent la tension du revêtement de coussin (31) en pivotant vers l'avant, Lesdits coussins latéraux (22, 23) repoussant les accrochages de revêtement (33) vers le milieu du coussin central (21).

8. Siège de véhicule selon l'une des revendications 1 à 7, **caractérisé en ce que** les accrochages de revêtement (33) sont réalisés comme rails de serrage en forme de U, lesdits rails de serrage pivotant chacun autour d'un axe de rotation (34) disposé sensiblement parallèlement à la plaque de support (25) et s'étendant le long du contour extérieur du coussin central (21).

9. Siège de véhicule selon la revendication 8, **caractérisé en ce que** les coussins latéraux (22, 23) présentent un axe de pivotement disposé au niveau de l'axe de rotation (34) des accrochages de revêtement (33), et **en ce que** l'axe de pivotement des coussins latéraux (22, 23) traverse préférentiellement l'axe de rotation (34) des accrochages de revêtement (33).
